# EUROPEAN PATENT SPECIFICATION

(11) **EP 4 013 216 B1**
(45) Date of publication and mention of the grant of the patent: **23.04.2025**
(21) Application number: 20853032.9
(22) Date of filing: 14.08.2020
(51) Int. Cl.: G05D 1/00, A01G 23/00, B62D 15/02

(54) **METHOD AND SYSTEM IN A FOREST MACHINE**
VERFAHREN UND SYSTEM IN EINER WALDMASCHINE
PROCÉDÉ ET SYSTÈME DANS UNE MACHINE FORESTIÈRE

(30) Priority: 14.08.2019 FI 20195678
(43) Date of publication of application: 22.06.2022
(73) Proprietor: Ponsse OYJ, 74200 Vieremä (FI)
(72) Inventor: HAVIMÄKI, Esko, 74200 VIEREMÄ (FI)
(74) Representative: Kespat Oy
(86) International application number: PCT/FI2020/050529
(87) International publication number: WO 2021/028622

(56) References cited:
- EP-A1- 3 843 531
- WO-A1-2010/032495
- WO-A1-2020/043956
- US-A1- 2009 204 281
- US-A1- 2015 206 015
- US-A1- 2018 095 476
- US-B1- 6 336 051
- OVASKAINEN HEIKKI ET AL.: "Kohti automaattista puunkorjuun laadun mittaamista", METSATEHON RAPORTTI 251: METSATEHO, 15 April 2019 (2019-04-15), pages 8 - 14, XP055793333, ISSN: 1796-2374, Retrieved from the Internet <URL:http://www.metsateho.fi/wp-content/uploads/Raportti_251_Kohti_automaattista_puunkorjuun_laadun_mittaamista.pdf>

## Description

The invention relates to a method in a forest machine, in which method the surroundings of the forest machine are observed using one or more sensors, and the observations are assembled to form a database of the surroundings, and the database is utilized in the operation of the forest machine. The invention also relates to a system in a forest machine.

In the prior art, a database formed of the surroundings is used, for example, in measuring the quality characteristics of a stand of trees, particularly from the viewpoint of the sawmill industry. Using the developed technology, a detailed 3D point cloud of the forest can be produced to form a database, from which even the trunks and branches of individual trees can be measured. The analysed data can then be used to plan felling. For example, a harvester can be taken to a stand marked for felling in which there is a tree it is wished to fell.

The creation of the database is a separate operation, which requires its own equipment and own operator. In addition, the creation of the database demands a great deal of computation and storage capacity. From the database, a view that can be examined by eye can be formed, which is transmitted to the harvester for final utilization. Another problem then is the alignment of the view with the ground, so that the driver can select the correct trees to fell. Despite all the collected and analysed information, the driver of the forwarder following the harvester has only vague location and quality data on the felled timber.

The invention is intended to create a new type of method for a forest machine, by which a database of the surroundings can be formed more simply than before and further that the database can be utilized more concretely than before. In addition, the invention is intended to create a new type of a system for a forest machine, which is simple and can be utilized directly to operate the forest machine. The characteristic features of the method according to the present invention are stated in the accompanying Claim 1. Correspondingly, the characteristic features of the system according to the present invention are stated in the accompanying Claim 13. In the method and system according to the invention, a database formed of observations is utilized in a new and surprising manner. Generally, the database is formed in the forest machine. In addition, the database is preferably used in real time to operate the forest machine. The collection of felled trees is then facilitated and at the same time problem situations can be avoided. In addition, data on a stand for felling remains in the system and can be utilized later, for example, to verify the felling result or the felling trace, or, for example, to verify the thinning density or ground damage.

In the following, the invention is described in detail with reference to the accompanying drawings showing some embodiments of the invention, in which
- Figure 1: shows the operation of a forest machine, in which the method and system according to the invention are utilized,
- Figure 2a: shows raw data detected from the ground,
- Figure 2b: shows a view formed from the ground, for utilization in the invention,
- Figure 3: shows a forest machine implementing the method according to the invention and equipped with the system according to the invention,
- Figure 4: shows a schematic diagram of the system according to the invention.

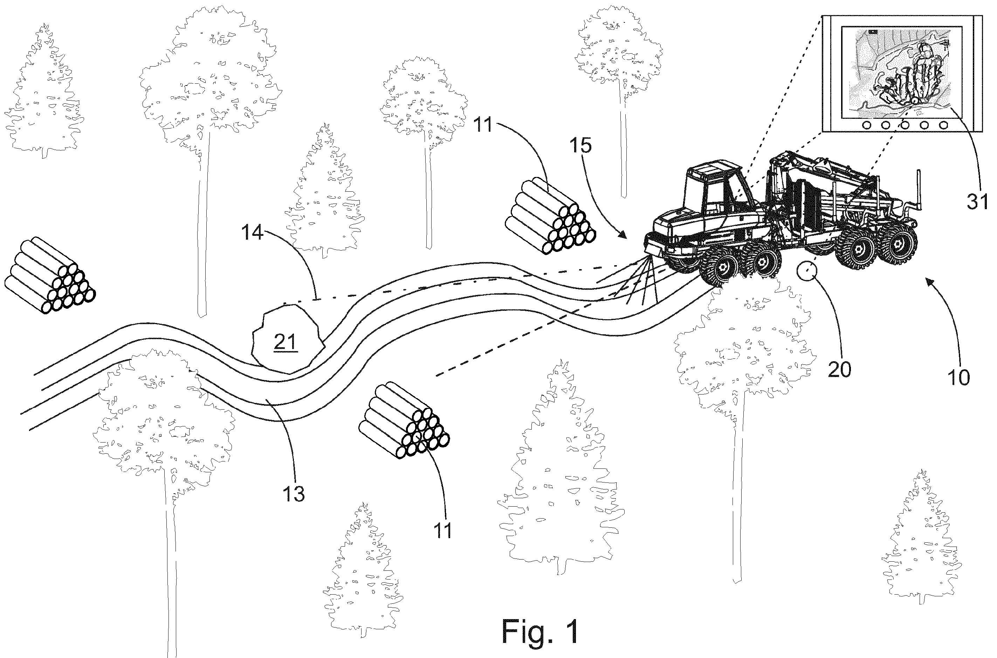

Figure 1 shows a forest machine 10, which is used to collect the trees previously felled and cut by a harvester. Generally, the trees are cut into stacks 11 by timber grade, or at least into separate grab piles. It is then as easy as possible for the forest machine's driver to find the trees on the ground. At the same time, the mixing of different timber grades with each other is avoided. The forest machine can be driven in both directions, as the driver's seat can also be rotated. To aid the driver, there is nowadays usually also a camera in addition to mirrors. Accessories warning of obstacles are also used. In some cases, in thinning the driver has his back facing the driving direction when making a load. The forest machine is then driven on the basis of the camera, which is difficult and slow. At the same time, trees left standing can easily be knocked. Alternatively, the driver must turn his seat while moving the forest machine, which further slows work. Figure 1 shows thinning felling, in which some trees are left to grow. The forest machine's route then winds about, taking into account the ground and the remaining trees. In this situation, the forest machine's driver usually has his back to the driving direction and is looking at the load space, to load as efficiently as possible.

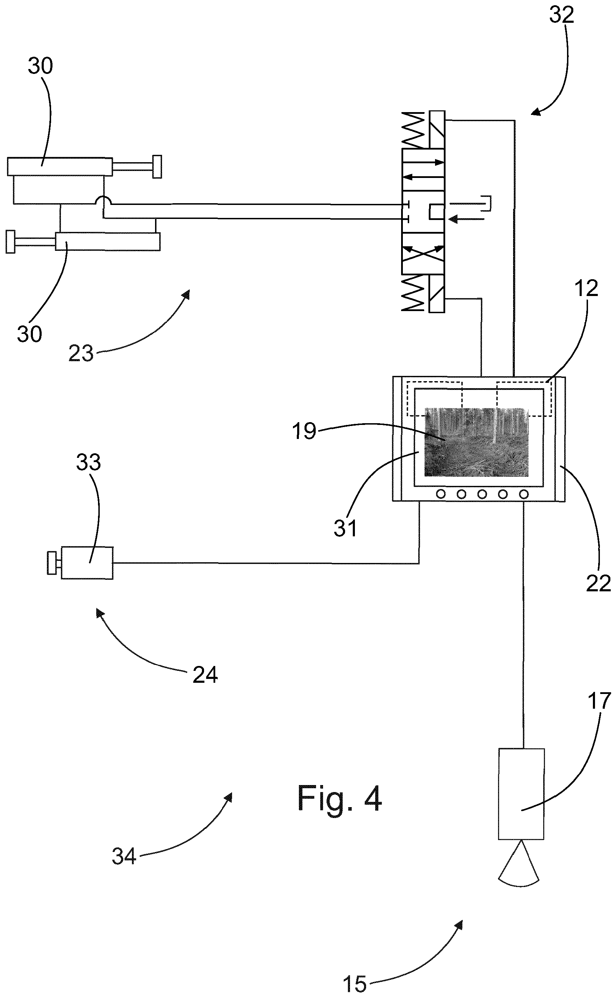

The invention relates to a method in a forest machine. In the method, the forest machine's 10 surroundings are observed. In addition, the observations are collected to form a database 12 of the surroundings (Figure 4) and the database is utilized in the operation of the forest machine 10. In the invention, observations of a limited area are used. The number of observations is then limited, and thus little processing capacity is required. In addition, the database 12 is formed in real time in the forest machine 10. Firstly, the existing equipment in the forest machine can be used for processing and secondly there is no delay in forming the database. The method can then be applied without investing in equipment and external apparatuses. Further, a view 19 is formed from the database 12 of selected observations, from which a track 13 in the surroundings is recognized. A view can be formed simply from the observation data, from which the track can be recognized by software means. Though the apparatus observes the entire surroundings, the number of observations remains limited by selecting only observations from a limited area. In addition, the forest machine 10 is oriented in the direction of the track 13, once the direction of travel 14 of the forest machine 10 relative to the recognized track 13 has been detected. Here the direction of travel refers to the straight line along which the forest machine would move, if the steering wheel was not moved. The forest machine can move forward or back along this line, but information on the direction of travel can be defined from the system in the forest machine. In Figure 1, the forest machine's 10 direction of travel 14 (dot-and-dash line) differs from the track's 13 direction (broken line), which is detected by the method the forest machine 10 then being steered in the direction of the track 13. In other words, the system controls the forest machine on the basis of the database.

The level of control can be selected in the system. According to the invention, when steering, the forest machine 10 is controlled automatically, semi-automatically, or with assistance, based on the database. In automatic control, the driver trusts the system, which controls the forest machine entirely on the basis of the database. The driver can then concentrate on operating the loader. In semi-automatic control, the system starts steering, but the real steering movement is made by the driver. From even a small steering movement the driver feels the direction in which the system would have steered. In assisted control, the system proposes a suitable steering direction, for example by an arrow in the display of the data system belonging to the system, or by nudging the controls, or some other haptic feedback through the controls. After receiving assistance from the control, the driver decides on the progress of the forest machine. In other words, the driver decides when and at what speed the forest machine will move.

Even control by, or assistance by the system will significantly facilitate the driver's work. The driver can trustingly proceed along the track without actually steering himself. Tree damage and other known drawbacks can then be avoided. According to the invention, in addition to steering, the forest machine 10 can be driven automatically, semi-automatically, or with assistance. In automatic driving, the system determines the speed of the forest machine according to the situation. In semi-automatic driving, the system either slightly accelerates or slows the forest machine to control driving. In assisted driving, for example if the system detects the next stack being far away or the stack's position being already in the system, the system proposes acceleration. The driver can then accelerate the forest machine to the next stack. As in steering, the system can guide the driver to accelerate or slow by showing a suitable signal in the display. The driver can preferably choose how the system controls steering and driving. The driver can then select the level of automation according to the situation. However, in every situation, collisions with trees left to grow and other obstacles are avoided. In other ways too possible problematic situations can be forecast. Generally, when the last load is lifted from the stack and it is wished to move the forest machine, the driver only has to open the grab enough for the trees to be taken into the load in the load space. This avoids the hoist and grab swaying when the forest machine is driven to the next stack. Excess movements and swaying stress the forest machine.

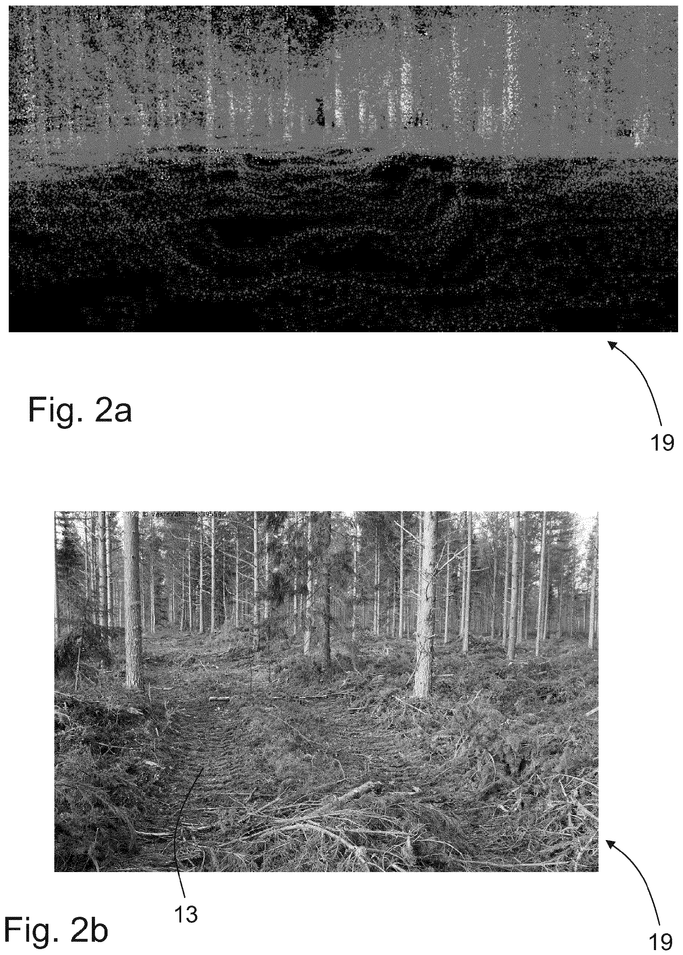

In the invention, the surroundings are observed using one or more sensors 15, from whose measurement data a 3D point cloud of the surroundings is formed. The system can utilize the 3D point cloud directly, but the 3D point cloud can also be shown as a visual view, which assists the forest machine's driver in his work. One or more of the following devices are used as sensors: a camera 16, radar 17, or lidar 18. Information will then be sufficient to form a precise and reliable database. Figure 2a shows the raw data collected by lidar. The raw data is an innumerable number of measurements and measurement points, from which a point cloud is formed. The point cloud obtained is processed according to the intended purpose, such as, for example, to be visualized to form a view (Figure 2b), or then to be processed to form a set of tree maps. For example, by pointing the devices downwards a view 19 is obtained, from which the track 13 can be reliably recognized (Figure 2b). In addition, the area being observed can be limited, keeping the amount of information to be processed small. In other words, the observations of the limited area are used in recognition. For example, only a specific sector in front of the forest machine is observed. The forest machine's data-processing capacity will then be sufficient and there will be as little delay as possible in forming a database. One example of a suitable lidar is the laser observation device marketed by the manufacture Velodyne under the product name *VLP-16,* which can measure up to 600 000 points a second.

Not only the track, but also the ground and trees are recognized from the view 19, more generally from the database. Thus, a record of the stand to be cut remains for later use. The view 19 is preferably recorded and attached to a map program in the forest machine 10. The view can then be utilized the next time when the previous track can be exploited.

The entire surroundings can be observed using other equipment in the forest machine, so that the trees and ground can also be observed, as stated above. The observation of the track, which is essential for steering, can be made from a limited, i.e. smaller amount of data, so that processing will be local and in real time. In addition, a view is formed from the database, from which primarily the track is recognized, as are various other things. By using observations of a limited area, the amount of data to be processed remains reasonable. Thus, processing can be done in the forest machine and preferably also in real time. This avoids delays in processing and data transmission when the steering of the forest machine will be correctly timed and sufficiently precise for the forest machine to be sure to stay on the track. Non-positionality also prevents the accumulation of errors, as the track is followed in real time on real ground. The view formed is also simple, but the track can be recognized sufficiently reliably and rapidly using present technology. During transfers the driver drives the forest machine normally, but when the stand is reached the driver guides the forest machine to the start of the track, when the system detects the track and as the trip progresses it steers the machine to remain on the track, while the driver concentrates on operating the hoist.

Position is also important in recording. In other words, it is necessary to know the real position of the recorded database or the view formed from it. In the area of the stand a mobile or GPS connection may not be available when positioning will fail. In the invention, a known starting point 20 is thus sought before observation, to position the forest machine 10 (Figure 1). In practice, a network connection can generally be still found on the forest track, but farther into the forest connections are not available. On the other hand, the starting point can be defined from a known point included in the recorded map, the precise co-ordinates of which are known. The known position is then defined in the map program or the position is defined from some known position, which is attached to the map program. The positioning of, and/or at least a definition of the position of the starting point of the map is always sought to be made primarily using GPS or some other known satellite positioning, such as Glonass, Galileo, Beidou, IRNSS, or QZSS.

Once the starting point 20 has been sought, the view 19 is attached to the map program stored in the forest machine 10, so as to position the forest machine 10 without a network connection. The position of the forest machine will then be known even without a positioning connection. In addition, after seeking the said starting point 20 the view 19 is updated by recording part of the view 19 as known to position the forest machine 10 without a network connection. Figure 1 shows the map program, to which the starting point 20 is connected, instead of the view. Thus, the position remains known, when the real view is attached as part of the map program. Preferably the obstacles 21 on, or near the track 13 are also defined in the observation. Problems can then be avoided beforehand. Large stones may have rolled onto the track after the harvester, or a large tree may have fallen across the track. Now the system can also be used to detect obstacles. Further the system can be developed by connecting to observation machine learning, which is arranged to decide whether to go around the detected obstacle 21, or what should be done after detecting an obstacle. Previous going around or over an obstacle remains in the memory and the stored data can be utilized in future operations. For example, there is reason to indicate to take care at a previous very deep part of the track, or even to bypass the point in question.

By means of the method and system according to the invention, particularly the productivity of a forest machine can be significantly raised, and better quality can be achieved in thinning, when the trees left standing are not damaged. By installing a laser scanner or a distance camera in the front or rear of the forest machine, track data can be formed in the forest machine, based on which the automation can be arranged to steer and even drive the forest machine. Driving can be done by the driver or the automation, after which the driver can concentrate on only collecting trees while the automation takes care of steering and driving.

As not only the ground but also the trees are observed, the system can also be utilized in group felling and thinning. The driving and steering automation can be programmed so that large stones and stumps are not driven over, instead the system seeks the best route from the track, for example, in terms of speed, length of trip, or fuel consumption.

In the invention, the forest machine is steered along an observed track. Observation and steering are preferably done automatically, making steering movements by the driver unnecessary. It is enough for the driver to define speed according to the situation. For example, the forest machine can be driven between small stacks without stopping and stopped only at larger stacks. When starting again, acceleration is enough while the system steers the forest machine along the track. A known camera view can still support the driver to ensure staying on the track, but the system, however, actively steers the forest machine.

The system can also be arranged to drive the forest machine automatically. In other words, the system determines when the forest machine will move and at what speed. For example, when the hoist is moving the system slows down and when lifting a heavy load, it stops the forest machine. At the same time, the system observes the track and guides the forest machine to stay on the track. At a large stack, where trees must be lifted more than once, the system can be instructed to await starting. The control can be the single press of a button in the hoist's controls, or a specific function when operating the hoist, from which the system recognizes the next lifting coming from the same stack. If point control is being used, the system recognizes the situation when the grab is being taken to the same stack by point control. The system then keeps the forest machine stationary. After, or even during the last lifting, the driver can press a specific button or carry out a pre-defined operation, from which the system knows to move the forest machine forward. The operation activating starting can be, for example, an extended opening of the grab or the rotation of the opened grab over a pre-set rotation-angle limit.

The system includes one or more sensors 15 arranged to observe the forest machine's 10 surroundings. In addition, the system includes a database 12 for collecting observations of the surroundings. According to the method, the system includes means 34 for detecting a previous track 13 in the surroundings and the forest machine's 10 direction of travel 14 on the basis of a view formed from the database 12, as well as for steering the forest machine 10 in the direction of the track 13, once the forest machine's 10 direction of travel 14 relative to the detected track 13 has been recognized.

Nowadays in a forest machine there is a map program as part of the data system 22, in which the database 12 is arranged. The observation means, such as the sensor 15, are connected to the data system and are set to control the necessary operating devices, such as the control means 23 and/or driving means 24. In other ways too the driver's commands are transmitted as electrical pre-control to the hydraulic operating devices. For example, even one hydraulic cylinder, by which the mutual angle of the forest machine's chassis is altered, is enough to steer the forest machine. The adding of driving to steering already demands more signals, but these too are of a limited number. At the same time, for example economical acceleration ramps can be defined in the system, by which the forest machine's starting is as rapid as possible, but nevertheless economical. Observation of the ground and surroundings can affect the acceleration ramp. On an even and straight track acceleration can even be sharp, but when approaching a curve, hill, or other obstacle acceleration is more gentle. On the other hand, if the driver is already preparing for the next lifting, speed is sought to be kept even, to avoid stops. Repeated acceleration and slowing are then avoided, so that progress is economical. At the same time, strain on the driver and the hoist too is reduced.

The observation means, more specifically the sensors, can include various devices by which the ground can be observed with sufficient precision. For example, by combining the image material of a 360-camera a 3D model can be formed, from which the track can be observed. Correspondingly, it is possible to obtain a 3D point cloud, from which the shapes of the ground such as tracks can be observed, directly from radar and lidar imaging. Observation is preferably combined with the map program of the forest machine's data system, when the real position of the forest machine can be defined on the basis of the map program and real-time observation, even though a GPS signal is unavailable. Miniature flying devices, such as drones, can also be utilized to observe the surroundings.

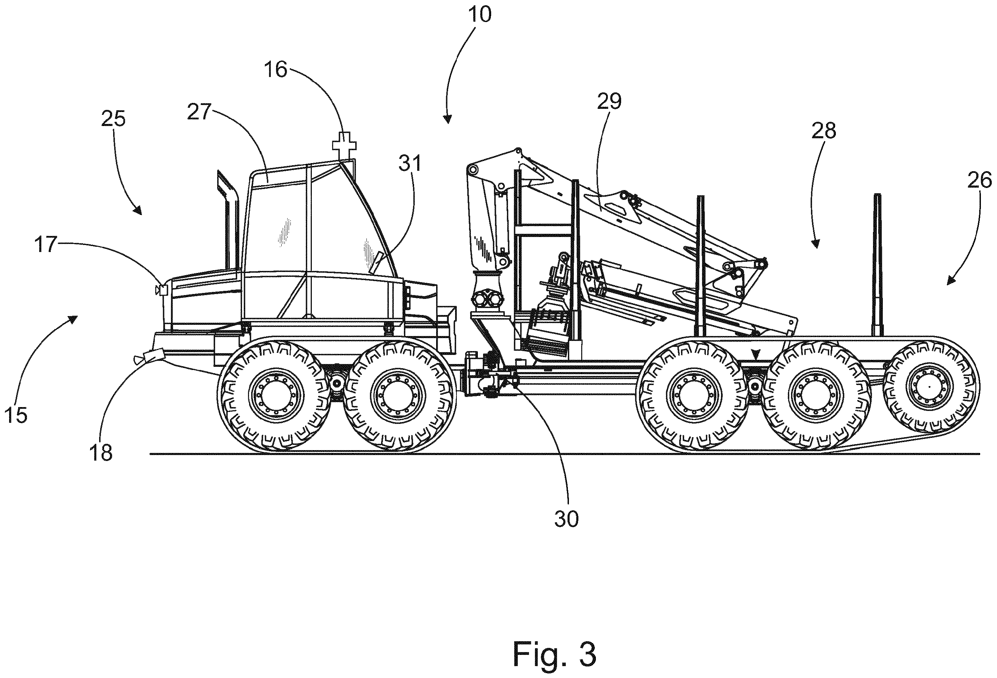

Figure 3 shows a forest machine 10, which includes a front chassis 25 and a rear chassis 26. The front chassis 25 has an engine and a cab 27. Correspondingly, the rear chassis 26 has a load space 28 and a hoist 29. The front chassis 25 and the rear chassis 26 are pivoted to each other and the chassis' mutual angle of rotation is altered by means of one or more hydraulic cylinders 30, which are part of the steering means 23. One part of the system is a display device 31, which is located in the cab 27. The display 31 is connected to the data system 22, which controls and monitors the forest machine and its operating devices. The necessary sensors, database, and accessories are connected to the data system. In Figure 3 a camera 16, radar 17, and lidar 18 are connected to the system. Here the sensors are located in the front chassis, but they can equally well also be located in the rear chassis. For example, the angle between the forest machine's front and rear chassis is detected by sensors, such as an inertia measurement unit, based on which the control system detects the angle and permits chassis-steering of the forest machine.

Figure 4 shows a schematic example of the system. Here the data system 22, including the display 31, contains all the means needed for collecting and processing data and further for operating the operating devices and thus for steering and driving the forest machine, according to the method. Here the radar 17 is connected directly to the data system 22, but it is also possible to utilize observation means connected to the machine-control system, such as a 360-camera. In the embodiment shown, the system controls a valve 32, which is linked to two cross-connected hydraulic cylinders 30. In the forest-machine embodiment the hydraulic cylinders are fitted on both sides of the chassis pivot. When steering the forest machine, the working movements of both hydraulic cylinders are equal in magnitude but opposite in direction. Thus, the forest machine can be steered using a single valve. Correspondingly, for driving a servo motor 33 is connected here to the system. The servo motor can be arranged to operate the accelerator pedal, or directly the feed-pump's regulator. Alternatively, the control data is transmitted directly electrically to the machine-control system. In a modern forest machine equipped with various observation means the functionality of the method can be obtained by means of software. The method then becomes available through a software update.

## Claims

1. Method for operation of a forest machine, in which method the surroundings of the forest machine (10) are observed using one or more sensors (15), and the observations are assembled to form a database (12) of the surroundings, and the database (12) is utilized in the operation of the forest machine (10), **characterized in that** the observations of a limited area are used, and the database (12) is formed in real time in the forest machine (10), a view (19) to the direction of travel (14) being formed during thinning from the database (12) of selected observations from which a track (13) in the surroundings is recognized, and the forest machine (10) is oriented with the control means (23) belonging to the forest machine (10) in the direction of the track (13), once the forest machine's (10) direction of travel (14) relative to the recognized track (13) has been detected, and when orienting, the forest machine (10) is steered automatically, semi-automatically, or with assistance, based on the view (19).

2. Method according to Claim 1, **characterized in that**, in addition to steering, the forest machine (10) is driven automatically, semi-automatically, or with assistance.

3. Method according to Claim 1 or 2, **characterized in that** the surroundings are observed using one or more sensors (15), from whose measurement data a 3D point cloud of the surroundings is formed.

4. Method according to Claim 3, **characterized in that** one or more of the following devices: camera (16), radar (17), or lidar (18), is used as the sensor (15).

5. Method according to any of Claims 1 - 4, **characterized in that** the ground and trees are also recognized from the view (19).

6. Method according to any of Claims 1 - 5, **characterized in that** the view (19) is recorded and the view (19) is attached to the map program in the forest machine (10).

7. Method according to any of Claims 1 - 6, **characterized in that**, before observing, a known starting point (20) is sought, to position the forest machine (10).

8. Method according to Claim 7, **characterized in that**, after seeking the starting point (20), the view (19) is attached to the map program recorded in the forest machine (10), to position the forest machine (10) without a network connection.

9. Method according to Claim 8, **characterized in that**, after seeking the starting point (20) the view (19) is updated by storing part of the view (19) as known, to position the forest machine (10) without a network connection.

10. Method according to any of Claims 1 - 9, **characterized in that** obstacles (21) on the track (13), or in its vicinity, are also defined from the view (19).

11. Method according to Claim 10, **characterized in that** machine learning is added to the observing, which is arranged to resolve whether to steer around a detected obstacle (21).

12. Forest machine with a system, which system includes one or more sensors (15) arranged to observe the forest machine's (10) surroundings as well as a database (12) to assemble observations of the surroundings, which database (12) is arranged to be utilized in the operation of the forest machine (10), **characterized in that** the system includes means (34), which are arranged to form in real time in the forest machine (10) a database (12) of the observations of a limited area (10), and to recognize a track (13) in the surroundings based on the view (19) to the direction of travel (14) formed during thinning from the database (12), and the means (34) include a data system (22), containing the database (12), fitted to the forest machine (10), which is arranged to operate the control means (23) belonging to the forest machine (10) to orient the forest machine (10) automatically, semi-automatically, or with assistance, based on the view (19) in the direction of the track (13), once the forest machine's (10) direction of travel (14) relative to the recognized track (13) has been detected.

13. Forest machine with a system according to Claim 12, **characterized in that** the data system (22) is arranged to operate the driving means (24) belonging to the forest machine (10).

## Patentansprüche

1. Verfahren zum Betrieb einer Waldmaschine, bei dem die Umgebung der Waldmaschine (10) unter Verwendung eines oder mehrerer Sensoren (15) beobachtet wird, und die Beobachtungen zur Bildung einer Datenbank (12) der Umgebung montiert werden, und die Datenbank (12) beim Betrieb der Waldmaschine (10) verwendet wird, **dadurch gekennzeichnet, dass** die Beobachtungen eines begrenzten Bereichs verwendet werden und die Datenbank (12) in Echtzeit in der Waldmaschine (10) gebildet wird, wobei bei der Durchforstung aus der Datenbank (12) ausgewählter Beobachtungen eine Sicht (19) in Richtung der Fahrtrichtung (14) gebildet wird, aus der eine Bahn (13) in der Umgebung erkannt wird, und die Waldmaschine (10) mit den zur Waldmaschine (10) gehörenden Steuermitteln (23) in Richtung der Bahn (13) ausgerichtet wird, nachdem die Fahrtrichtung (14) der Waldmaschine (10) relativ zur erkannten Bahn (13) erfasst worden ist, und bei der Ausrichtung die Waldmaschine (10) basierend auf der Sicht (19) automatisch, halbautomatisch oder mit Unterstützung gelenkt wird.

2. Verfahren nach Anspruch 1, **dadurch gekennzeichnet, dass** die Waldmaschine (10) zusätzlich zur Lenkung automatisch, halbautomatisch oder mit Unterstützung gefahren wird.

3. Verfahren nach Anspruch 1 oder 2, **dadurch gekennzeichnet, dass** die Umgebung mit einem oder mehreren Sensoren (15) beobachtet wird, aus deren Messdaten eine 3D-Punktwolke der Umgebung gebildet wird.

4. Verfahren nach Anspruch 3, **dadurch gekennzeichnet, dass** eine oder mehrere der folgenden Vorrichtungen: Kamera (16), Radar (17) oder Lidar (18), als Sensor (15) verwendet wird.

5. Verfahren nach einem der Ansprüche 1 bis 4, **dadurch gekennzeichnet, dass** auch der Boden und die Bäume in der Sicht (19) erkannt werden.

6. Verfahren nach einem der Ansprüche 1 bis 5, **dadurch gekennzeichnet, dass** die Sicht (19) aufgezeichnet wird und die Sicht (19) dem Kartenprogramm in der Waldmaschine (10) zugeordnet wird.

7. Verfahren nach einem der Ansprüche 1 bis 6, **dadurch gekennzeichnet, dass** vor der Beobachtung ein bekannter Startpunkt (20) gesucht wird, um die Waldmaschine (10) zu positionieren.

8. Verfahren nach Anspruch 7, **dadurch gekennzeichnet, dass** nach dem Aufsuchen des Startpunktes (20) die Sicht (19) mit dem in der Waldmaschine (10) aufgezeichneten Kartenprogramm verbunden wird, um die Waldmaschine (10) ohne Netzwerkverbindung zu positionieren.

9. Verfahren nach Anspruch 8, **dadurch gekennzeichnet, dass** nach der Suche des Startpunktes (20) die Sicht (19) aktualisiert wird, indem ein Teil der Sicht (19) als bekannt gespeichert wird, um die Waldmaschine (10) ohne Netzwerkverbindung zu positionieren.

10. Verfahren nach einem der Ansprüche 1 bis 9, **dadurch gekennzeichnet, dass** Hindernisse (21) auf der Bahn (13) oder in deren Nähe auch aus der Sicht (19) definiert werden.

11. Verfahren nach Anspruch 10, **dadurch gekennzeichnet, dass** der Beobachtung ein maschinelles Lernen hinzugefügt wird, das so beschaffen ist, dass es entscheidet, ob um ein erfasstes Hindernis (21) herumgesteuert werden soll.

12. Waldmaschine mit einem System, wobei das System einen oder mehrere Sensoren (15) einschließt, die angeordnet sind, um die Umgebung der Waldmaschine (10) zu beobachten, sowie eine Datenbank (12), um Beobachtungen der Umgebung zu montieren, wobei die Datenbank (12) angeordnet ist, um beim Betrieb der Waldmaschine (10) verwendet zu werden, **dadurch gekennzeichnet, dass** das System Mittel (34) einschließt, die so beschaffen sind, dass sie in der Waldmaschine (10) in Echtzeit eine Datenbank (12) der Beobachtungen eines begrenzten Bereichs (10) bilden und eine Bahn (13) in der Umgebung basierend auf der bei der Durchforstung aus der Datenbank (12) gebildeten Sicht (19) in Richtung der Fahrtrichtung (14) erkennen, und dass die Mittel (34) ein Datensystem (22) einschließen, das die Datenbank (12) enthält, das an der Waldmaschine (10) angebracht ist und dazu eingerichtet ist, die zur Waldmaschine (10) gehörenden Steuermittel (23) zu betätigen, um die Waldmaschine (10) basierend auf der Sicht (19) in Richtung der Bahn (13) automatisch, halbautomatisch oder mit Unterstützung auszurichten, sobald die Fahrtrichtung (14) der Waldmaschine (10) relativ zur erkannten Bahn (13) erfasst worden ist.

13. Waldmaschine mit einem System nach Anspruch 12, **dadurch gekennzeichnet, dass** das Datensystem (22) eingerichtet ist, die zur Waldmaschine (10) gehörenden Antriebsmittel (24) zu bedienen.

## Revendications

1. Procédé pour le fonctionnement d'une machine forestière, dans lequel les environs de la machine forestière (10) sont observés au moyen d'un ou de plusieurs capteurs (15), et les observations sont assemblées pour former une base de données (12) des environs, et la base de données (12) est utilisée dans le fonctionnement de la machine forestière (10), **caractérisé en ce que** les observations d'une zone limitée sont utilisées, et la base de données (12) est formée en temps réel dans la machine forestière (10), une vue (19) dans le sens de déplacement (14) étant formée au cours de l'éclaircissage à partir de la base de données (12) des observations sélectionnées à partir desquelles une piste (13) dans les environs est déterminée, et la machine forestière (10) est orientée avec les moyens de commande (23) de la machine forestière (10) dans le sens de la piste (13), une fois que le sens de déplacement (14) de la machine forestière (10) par rapport à la piste reconnue (13) a été détecté, et lors de l'orientation, la machine forestière (10) est dirigée automatiquement, semi-automatiquement ou avec une assistance, en fonction de la vue (19).

2. Procédé conformément à la revendication 1, **caractérisé en ce que**, en plus d'être dirigée, la machine forestière (10) est entraînée automatiquement, semi-automatiquement ou avec une assistance.

3. Procédé conformément à la revendication 1 ou 2, **caractérisé en ce que** les environs sont observés au moyen d'un ou de plusieurs capteurs (15), dont les données de mesure permettent de former un nuage de points en 3D des environs.

4. Procédé conformément à la revendication 3, **caractérisé en ce que** l'un ou plusieurs des dispositifs suivants : caméra (16), radar (17) ou lidar (18), est utilisé en tant que capteur (15).

5. Procédé conformément à l'une quelconque des revendications 1 à 4, **caractérisé en ce que** le sol et les arbres sont également visibles dans la vue (19).

6. Procédé conformément à l'une quelconque des revendications 1 à 5, **caractérisé en ce que** la vue (19) est enregistrée et la vue (19) est jointe au programme de cartographie dans la machine forestière (10).

7. Procédé conformément à l'une quelconque des revendications 1 à 6, **caractérisé en ce que**, avant l'observation, un point de départ connu (20) est recherché afin de positionner la machine forestière (10).

8. Procédé conformément à la revendication 7, **caractérisé en ce que**, après avoir recherché le point de départ (20), la vue (19) est jointe au programme de cartographie enregistré dans la machine forestière (10) afin de positionner la machine forestière (10) sans connexion réseau.

9. Procédé conformément à la revendication 8, **caractérisé en ce que**, après avoir recherché le point de départ (20), la vue (19) est mise à jour en stockant une partie de la vue (19) connue afin de positionner la machine forestière (10) sans connexion réseau.

10. Procédé conformément à l'une quelconque des revendications 1 à 9, **caractérisé en ce que** des obstacles (21) sur la piste (13), ou à proximité de celle-ci, sont également définis à partir de la vue (19).

11. Procédé conformément à la revendication 10, **caractérisé en ce que** l'apprentissage automatique est ajouté à l'observation et permet de décider si un obstacle (21) détecté doit être contourné ou non.

12. Machine forestière avec un système, lequel comprend un ou plusieurs capteurs (15) prévus pour observer les environs de la machine forestière (10) ainsi qu'une base de données (12) pour assembler les observations des environs, ladite base de données (12) étant prévue pour être utilisée lors du fonctionnement de la machine forestière (10), **caractérisée en ce que** le système comprend des moyens (34) prévus pour former en temps réel dans la machine forestière (10) une base de données (12) des observations d'une zone limitée (10), et pour déterminer une piste (13) dans les environs en fonction de la vue (19) dans le sens de déplacement (14) formée pendant l'éclaircissage à partir de la base de données (12), et les moyens (34) comprennent un système de données (22) contenant la base de données (12) installé sur la machine forestière (10), qui est prévu pour actionner les moyens de commande (23) de la machine forestière (10) afin d'orienter la machine forestière (10) automatiquement, semi-automatiquement ou avec une assistance, en fonction de la vue (19) dans le sens de la piste (13), une fois que le sens de déplacement (14) de la machine forestière (10) par rapport à la piste reconnue (13) a été détecté.

13. Machine forestière avec un système conformément à la revendication 12, **caractérisée en ce que** le système de données (22) est prévu pour actionner les moyens d'entraînement (24) de la machine forestière (10).
